# EUROPEAN PATENT SPECIFICATION

(11) **EP 3 158 003 B1**
(45) Date of publication and mention of the grant of the patent: **20.11.2019**
(21) Application number: 15744397.9
(22) Date of filing: 23.06.2015
(51) Int. Cl.: C08L 67/02, C08L 67/03, C08L 69/00, C08L 79/08, C08K 3/00, C08K 7/14, C08K 3/013, C08L 67/00

(54) **FILLER REINFORCED THERMOPLASTIC COMPOSITIONS WITH IMPROVED BONDING STRENGTH**
FÜLLERVERSTÄRKTE THERMOPLASTISCHE ZUSAMMENSETZUNGEN MIT VERBESSERTER HAFTFESTIGKEIT
COMPOSITIONS THERMOPLASTIQUES RENFORCÉES DE CHARGE À RÉSISTANCE DE COLLAGE ÉLEVÉE

(30) Priority: 23.06.2014 US 201462015825 P
(43) Date of publication of application: 26.04.2017
(73) Proprietor: SABIC Global Technologies B.V., 4612 PX Bergen op Zoom (NL)
(72) Inventor: HE, Yuanqing, Mt. Vernon, Indiana 47620-9367 (US); WEI, Zhenke, Shanghai 201220 (CN); GUAN, Bing, Shanghai 201319 (CN); SUN, Xiaoyu, Mt. Vernon, IN 47620-9367 (US); SHI, Hongtao, Shanghai 201319 (CN)
(74) Representative: Elzaburu S.L.P.
(86) International application number: PCT/US2015/037106
(87) International publication number: WO 2015/200272

(56) References cited:
- EP-A1- 1 559 542
- EP-A1- 2 174 766
- WO-A1-2005/075565
- WO-A1-2012/016927
- WO-A1-2015/092559
- US-A- 4 950 360
- US-A1- 2008 269 400

## Description

### BACKGROUND

Nano molding technology (NMT) is a process by which plastic resin can be injected onto metal surface. The NMT process mechanically bonds plastic to metal by etching the metal surface and injection molding the plastic components onto the etched surface. Accordingly, high bonding strength between the plastic and metal is critical for such applications. There are many factors to have effects on the bonding strength, such as selection of metal, molding process to bond plastic to metal, treatment process on metal, and plastic resms.

EP1559542 A1 discloses an aluminum alloy-and-resin composition composite for use in various electronic devices for mobile applications, home electrical products, medical devices, structural parts for vehicles, vehicle-mounted products, construction material parts, structural parts of other equipment, parts for exterior applications, and so forth, and also relates to a production method therefor.

EP2174766 A1 discloses a composite that is used ordinarily in transport equipment, electric equipment, medical equipment, general machinery and in other manufacturing fields and relates also to a technology for manufacturing such a composite. More particularly, it relates to a composite in which a ferrous material shaped article, shaped by various mechanical shaping processes, is integrated with a thermoplastic resin composition.

US4950360 A discloses a method of treating the surface of a molded article comprising a melt-processable polyester resin capable of forming an anisotropic melt phase. More particularly, it discloses a method of a surface treatment for efficiently preparing a molded article comprising a liquid crystal polyester resin excellent in heat resistance and fabricability and having surface characteristic adapted to surface decoration by printing, painting, vacuum deposition, plating, etc. and bonding with an adhesive.

WO2012016927 A1 discloses thermoplastic molding compositions and the use of the thermoplastic molding compositions for the production of long-fiber-reinforced granules and the granules obtainable in this case. Moreover, it relates to the use of such granules for the production of impact-resistant moldings of any kind and the moldings obtainable in this case.

US2008269400 A1 discloses polyester polycarbonate compositions, methods of making, and articles formed therefrom.

WO2005075565 A1 discloses thermoplastic molding compositions and to the use of the novel molding compositions for the production of fibers, films and moldings of any kind, and the moldings obtainable in this case.

WO2015092559 A1 discloses a composition that includes specific amounts of a poly (alkylene terephthalate), a polycarbonate, a polyetherimide, glass fibers, and a flame retardant containing an organophosphine oxide and a nitrogen-containing flame retardant. The composition exhibits good flame retardancy and minimizes or avoids the surface plate-out observed in some other compositions containing organophosphate flame retardants. In some cases, heat resistance and/or melt flow are increased.

Despite significant research and development efforts, there remains a need for blended thermoplastic compositions that effectively address the appropriate balance of properties required in the consumer electronics industry such as, for example, blended thermoplastic compositions that are ductile yet have very high stiffness, while retaining desired dielectric properties. These and other shortcomings of the prior art are addressed by the present disclosure.

### SUMMARY

The present disclosure relates to thermoplastic compositions (e.g., thermoplastic engineering blends (TPE)) and methods for manufacturing thermoplastic engineering blends with high bonding strength for nano molding technology. Such compositions can be varied to meet additional value propositions including flame retardant performance, high stiffness, and crystallinity. Furthermore, pigments such as zinc sulfide (ZnS) and titanium oxide (Ti02), typically used as a white color pigment, are shown to promote bonding strength.

### BRIEF DESCRIPTION OF THE FIGURES

The drawings illustrate generally, by way of example, but not by way of limitation, various embodiments discussed in the present document.
FIG. 1 illustrates a metal form (18 millimeters (mm) x 50 mm x 1.5 mm) with an injection molded plastic thereon, showing a bonding area of 10 mm x 5 mm, in accordance with various embodiments.
FIG. 2 illustrates a metal form (10 mm x 50 mm x 2 mm) with an injection molded plastic thereon, showing a bonding area of 10 mm x 2 mm, in accordance with various embodiments.

### DETAILED DESCRIPTION

As used herein, the terms "about" and "at or about" mean that the amount or value in question can be the value designated some other value approximately or about the same. It is generally understood, as used herein, that it is the nominal value indicated ±10% variation unless otherwise indicated or inferred. The term is intended to convey that similar values promote equivalent results or effects recited in the claims.

The disclosed blended thermoplastic compositions comprise a polybutylene terephthalate component. As used herein, polybutylene terephthalate can be used interchangeably with poly(1,4-butylene terephthalate). Polybutylene terephthalate (PBT) is one type of polyester. Polyesters, which include poly(alkylene dicarboxylates), liquid crystalline polyesters, and polyester copolymers, can be useful in the disclosed thermoplastic compositions of the present disclosure. In general, polyesters, as described herein, including polybutylene terephthalate, are highly miscible with the polycarbonates when blended.

The compositions of the present disclosure comprise polyesters including, for example, aromatic polyesters, poly(alkylene esters) including poly(alkylene arylates), and poly(cycloalkylene diesters). In an aspect, useful aromatic polyesters can include, for example, poly(isophthalate-terephthalate-resorcinol)esters, poly(isophthalate-terephthalate-bisphenol A)esters, poly[(isophthalate- terephthalate-resorcinol)ester-co-(isophthalate- terephthalate-bisphenol A)]ester, or a combination comprising at least one of these. Also contemplated are aromatic polyesters with a minor amount, e.g., 0.5 to 10 weight percent (wt %), based on the total weight of the polyester, of units derived from an aliphatic diacid and/or an aliphatic polyol to make copolyesters. Examples of poly(alkylene terephthalates) include poly(ethylene terephthalate) (PET), poly(1,4-butylene terephthalate) (PBT), and poly(propylene terephthalate) (PPT). Also useful are poly(alkylene naphthanoates), such as poly(ethylene naphthanoate) (PEN), and poly(butylene naphthanoate) (PBN). A useful poly(cycloalkylene diester) is poly(cyclohexanedimethylene terephthalate) (PCT). Combinations comprising at least one of the foregoing polyesters can also be used.

Copolymers comprising alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETO where the polymer comprises greater than or equal to 50 mole % (mol %) of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s.

A mixture of polyester resins with differing viscosities can be used to make a blend of two or more polybutylene terephthalates to allow for control of viscosity of the final blended thermoplastic composition.

In a further aspect, the polybutylene terephthalate component can be present as a continuous phase in an amount from 30 wt% to 65 wt%. In other aspects, the polybutylene terephthalate component can be present in an amount from 30 wt% to 45 wt%. The composition can also comprise a second phase polymer having a
polyester component present in an amount from 5 wt% to 20 wt%.

For purposes of this specification the terms "resorcinol-based aryl polyesters" and "resorcinol-based polyaryl esters" and "resorcinol-based polyarylate" shall all mean a copolymer comprising resorcinol moieties and resorcinol-based ester linkages and possibly other linkages also such as resorcinol-based polycarbonate linkages. These terms are meant to include both polyesters only containing ester bonds and polyester carbonates in instances where resorcinol-based polycarbonate linkages are present.

In the context of this disclosure the term "polymer linkage" or "a polymer linkage" is defined as the type of chemical bond present in a polymer between two moieties. For example, a resorcinol-based polyaryl ester may comprise both carbonate linkages (e.g., between a resorcinol moiety and a bisphenol A moiety) and ester linkages (e.g., between a resorcinol moiety and an isophthalic acid moiety).

Blends of siloxane copolymers, for instance siloxane polyimides or siloxane polycarbonates, with resorcinol derived polyaryl esters have surprisingly low heat release values. The siloxane copolymers can be very effective in improving flame retardant (FR) performance even when included in such a blend at a very low concentration. This behavior is also observed when the resorcinol-based aryl polyester is a copolymer containing non-resorcinol-based moieties, for instance a resorcinol-bisphenol-A copolyester carbonate. For best effect, resorcinol moiety content (RMC) should be greater than 40 mole % of the total monomer-derived moieties present in the resorcinol-based aryl polyester. In some instances RMC of greater than 50 mole %, or even as high as 80, 90, or 100 mole % resorcinol moieties may be desired

The resorcinol-based polyarylate resin contains at least 40 mole % of moieties derived from resorcinol. The resorcinol moieties can be introduced as the reaction product of resorcinol, or functionalized resorcinol, with an aryl dicarboxylic acid or aryl dicarboxylic acid derivatives suitable for the formation of aryl ester linkages with the resorcinol. Suitable dicarboxylic acid derivatives include, for example, carboxylic acid halides, carboxylic acid esters and carboxylic acid salts.

The resorcinol-based polyarylate may further contain carbonate linkages derived from reaction of a bisphenol and a carbonate forming species, such as phosgene, making the resorcinol-based polyarylate a polyester carbonate copolymer. In another embodiment of the invention, resorcinol polyarylate carbonate copolymers will comprise the reaction products of iso- and terephthalic acid, resorcinol and optionally, bisphenol A and phosgene. In one aspect, the resorcinol polyester carbonate copolymer will be made in such a way that the number of bisphenol dicarboxylic ester linkages is minimized, for example by pre-reacting the resorcinol with the dicarboxylic acid to form an aryl polyester block and then reacting the aryl polyester block with the bisphenol and carbonate moiety to form the polycarbonate portion of the copolymer. Examples of resorcinol ester containing polymers can be found in U.S. Pat. Nos. 6,861,482, 6,559,270, 6,265,522, 6,294,647, 6,291,589 and 5,916,997.

As disclosed, the composition comprises polyetherimide (PEI). PEI includes PEI copolymers. The PEI can be selected from (i) PEI homopolymers, (ii) PEI co-polymers, e.g., polyetherimidesulfones or polyetherimide-siloxane copolymers, and (iii) combinations thereof. PEis are known polymers and are sold by SABIC under the ULTEM, EXTEM™*, and Siltem* brands (*Trademarks of SABIC).

PEI can have various desired properties such as high glass transition temperature, high heat resistance, good stiffness and strength, low warpage, and flame retardant properties.

Other diamines are also possible. Examples of suitable diamines include: m-phenylenediamine; p-phenylenediamine; 2,4-diaminotoluene; 2,6-diaminotoluene; m-xylylenediamine; p-xylylenediamine; benzidine; 3,3'-dimethylbenzidine; 3,3'-dimethoxybenzidine; 1,5-diaminonaphthalene; bis(4-aminophenyl)methane; bis(4-aminophenyl)propane; bis(4-aminophenyl)sulfide; bis(4-aminophenyl)sulfone; bis(4-aminophenyl)ether; 4,4'-diaminodiphenylpropane; 4,4'-diaminodiphenylmethane(4,4'-methylenedianiline); 4,4'-diaminodiphenylsulfide; 4,4'-diaminodiphenylsulfone; 4,4'-diaminodiphenylether(4,4'-oxydianiline); 1,5-diaminonaphthalene; 3,3'dimethylbenzidine; 3-methylheptamethylenediamine; 4,4-dimethylheptamethylenediamine; 2,2',3,3'-tetrahydro-3,3,3',3'-tetramethyl-1,1'-spirobi[1H-indene]-6,6'-diamine; 3,3',4,4'-tetrahydro-4,4,4',4'-tetramethyl-2,2'-spirobi[2H-1-benzo-pyran]-7 ,7'-diamine; 1,1'-bis[1-amino-2-methyl-4-phenyl]cyclohexane, and isomers thereof as well as mixtures and blends comprising at least one of the foregoing. In one embodiment, the diamines are specifically aromatic diamines, especially m-and p-phenylenediamine and mixtures comprising at least one of the foregoing.

The PEI, polyetherimide-siloxane copolymer, and polyetherimidesulfone can be used alone or in combination with each other and/or other of the disclosed polymeric materials in fabricating the polymeric components of the disclosure. In one embodiment, only the PEI is used. In another embodiment, the weight ratio of PEI to polyetherimide-siloxane copolymer can be from 99:1 to 50:50.

The PEis can have a weight average molecular weight (Mw) of 5,000 to 100,000 grams per mole (g/mol) as measured by gel permeation chromatography. In some embodiments the Mw can be 10,000 to 80,000. The PEI resin can be substantially free (less than 100 parts per million (ppm)) of halogen atoms. The PEI resin can be free of halogen atoms. The PEI resin can have an amount of halogen atoms below 100 ppm. In one embodiment, the amount of halogen atoms range from more than 0 to below 100 ppm. In another embodiment, the amount of halogen atoms is not detectable. Suitable PEis that can be used in the disclosed composites include, but are not limited to, ULTEM PEis. In a further aspect, the ULTEM PEI is ULTEM 1000.

The polyetherimide can be present in the composition as defined in the claims. For example, according to aspects of the disclosure, the polyetherimide can be present in an amount in the range of from 10 weight % up to 30 weight % relative to the total weight of the composition, including further exemplary amounts of 12 weight %, 15 weight %, 20 weight %, 25 weight %, 30 weight %. In still further aspects, the polyetherimide can be present within any range of amount derived from any two of the above stated values. For example, the polyetherimide can be present in an amount in the range of from 10 weight % to 30 weight %.

The composition comprises a polyester-polycarbonate polymer, also known as a polyester carbonate, copolyester polycarbonate, and copolyestercarbonate. The polyester-polycarbonate polymers can have a weight averaged molecular weight (MW) of 1,500 to 100,000 atomic mass units, specifically 1,700 to 50,000 atomic mass units, and more specifically 2,000 to 40,000 atomic mass units. Molecular Weight determinations are performed using gel permeation chromatography (GPC), using a crosslinked styrenedivinylbenzene column and calibrated to polystyrene references. Samples are prepared at a concentration of 1 mg/ml, and are eluted at a flow rate of 1.0 ml/min.

The poly(isophthalate-terephthalate-resorcinol ester)s can be obtained by interfacial polymerization or melt-process condensation, by solution phase condensation, or by transesterification polymerization. It is possible to use a branched poly(isophthalate-terephthalate-resorcinol ester)s in which a branching agent, for example, a glycol having three or more hydroxyl groups or a trifunctional or multifunctional carboxylic acid has been incorporated. Furthermore, it is sometimes desirable to have various concentrations of acid and hydroxyl end groups on the poly(isophthalate-terephthalate resorcinol ester)s, depending on the ultimate end use of the composition.

In one embodiment, the ratio of isophthalate terephthalate resorcinol (ITR) ester units (m) to the carbonate units (n) in the polyester-polycarbonate is 95:05 to 40:60, including exemplary amounts of 90:10, 85:15, 80:20, 75:25, 70:30, 65:35, 60:40, 55:45, 50:50, and 45:55. In still further aspects, the range can be derived from any two of the above stated ratios. For example, the ratio of ITR ester units (m) to the carbonate units (n) in the polyester-polycarbonate is 90:10 to 45:55.

In one aspect, the polyester carbonate comprises at least 40 mole % resorcinol based aryl ester linkages. In another aspect, the polyester carbonate comprises the resorcinol based aryl ester linkages in an amount ranging from 40 mole % to 95 mole % based on the total mole % of the polyester carbonate, including exemplary values of 45 mole %, 55 mole %, 60 mole %, 65 mole %, 70 mole %, 75 mole %, 80 mole %, 85 mole %, and 90 mole %. In still further aspects, the range can be derived from any two of the above stated values. For example, the polyester carbonate can comprise the resorcinol based aryl ester linkages in an amount ranging from 45 mole % to 90 mole % or 40 mole % to 90 mole % based on the total mole % of the polyester carbonate.

The polyester carbonate can be present in the composition in any desired amount. For example, according to aspects of the disclosure, the polyester carbonate can be present in an amount in the range of from 10 weight % up to 70 weight % relative to the total weight of the composition, including further exemplary amounts of 15 weight %, 20 weight %, 25 weight %, 30 weight %, 35 weight %, 40 weight %, and 45 weight %, 50 weight %, 55 weight %, 60 weight %, and 65 weight %. In still further aspects, the polyester carbonate can be present within any range of amount derived from any two of the above stated values. For example, the polyester carbonate can be present in an amount in the range of from 15 weight % to 65 weight %, or in an amount in the range of from 10 weight % to 30 weight %, or in an amount in the range of from 20 weight % to 50 weight % relative to the total weight of the composition.

In one aspect, a polycarbonate can comprise any polycarbonate material or mixture of materials, for example, as recited in U.S. Patent No. 7,786,246, which is hereby incorporated in its entirety for the specific purpose of disclosing various polycarbonate compositions and methods.

In various aspects, the blended thermoplastic compositions of the present disclosure further comprise a transesterification quenching agent. In a further aspect, the transesterification quenching agent is a phosphorus-containing stabilizer. In a still further aspect, the transesterification quenching agent comprises a phosphorus-containing stabilizer. In a yet further aspect, the transesterification quenching agent is an acidic phosphate salts, e.g. a monozinc phosphate, sodium dihydrogen phosphate, potassium hydrogen phosphate, calcium hydrogen phosphate, sodium acid pyrophosphate and mixtures thereof. In an even further aspect, the transesterification quenching agent comprises a phosphite compounds, e.g. a phosphite compound of the general formula P-(OR'h wherein each R' is the same or different and independently represents hydrogen, alkyl groups, aryl groups or any mixture thereof provided that at least one of the R' groups is hydrogen or alkyl. Illustratively, these include, but are not limited to, diphenylisodecyl phosphite, diisooctyl phosphite, dilauryl phosphite, diphenyl phosphite, phenyl diisodecyl phosphite, ethyl hexyl diphenyl phosphite, stearyl phosphite and mixtures thereof. In a still further aspect, the transesterification quenching agent comprises a Group IB or Group IIB phosphate salt such as zinc phosphate. In a further aspect, the transesterification quenching agent comprises a phosphorous oxo-acid such as phosphorous acid, phosphoric acid, polyphosphoric acid, or hypophosphorous acid.

In a further aspect, the phosphorus-containing stabilizer is selected from zinc phosphate, diphenylisodecyl phosphite, monosodium phosphate and sodium acid pyrophosphate and mixtures thereof. In a still further aspect, the phosphorus-containing stabilizer is zinc phosphate.

In a further aspect, the transesterification quenching agent is selected from an acidic phosphate salt, a Group IB phosphate salt, a Group IIB phosphate salt, a phosphorus oxo-acid, and mixtures thereof. In a still further aspect, the transesterification quenching agent is an acidic phosphate salt. In a yet further aspect, the transesterification quenching agent is selected from a Group IB phosphate salt and a Group IIB phosphate salt. In an even further aspect, the transesterification quenching agent is mono zinc phosphate. In a still further aspect, the transesterification quenching agent is a phosphorus oxo-acid. The transesterfication quenching agent can be sodium stearate.

In a further aspect, the transesterification quenching agent is present in an amount from greater than 0 wt% to 5 wt%.

In one aspect, the blended thermoplastic compositions of the present disclosure can optionally further comprises an epoxy hydrostabilizer agent. In a further aspect, the epoxy hydrostabilizer agent is an oligomeric epoxide. In a still further aspect, the oligomeric epoxide is a bisphenol A epoxide oligomer. In a yet further aspect, the Bisphenol A epoxide oligomer is a bisphenol A diglycidyl ether.

For example, the epoxy hydrostabilizer agent can be an epoxy resin formed from reacting epichlorohydrin with bisphenol A to form diglycidyl ethers of bisphenol A. The simplest resin of this class is formed from reacting two moles of epichlorohydrin with one mole of bisphenol A to form the bisphenol A diglycidyl ether (commonly abbreviated to DGEBA or BADGE). DGEBA resins are transparent colorless-to-pale-yellow liquids at room temperature, with viscosity typically in the range of 5-15 pascal second (Pa•s) at 25°C. Industrial grades normally contain some distribution of molecular weight, since pure DGEBA shows a strong tendency to form a crystalline solid upon storage at ambient temperature.

Exemplary epoxy hydrostabilizer agents useful in the blended thermoplastic compositions of the present disclosure are commercially available under the trade names EPON™ 1001, EPON™ 1002, EPON™ 1004, EPON™ 1007, and EPON™ 1009 (all available from Momentive Performance Materials Holdings, LLC); GT 6063, GT 6084, and GT 6097 (all available from Vantico); DER 661 and DER 662 (available from Dow Chemical); and Epiclon 1050, Epiclon 2050, Epiclon 3050, Epiclon 4050, and Epiclon 7050 (all available from DIC International (USA), LLC).

In a further aspect, the epoxy hydrostabilizer agent of the present is a low viscosity, low molecular weight material. In a still further aspect, the epoxy hydrostabilizer agent has a weight average molecular weight of less than or 5,000 g/mol when determined by gel permeation chromatography using polystyrene standards. In a yet further aspect, the epoxy hydrostabilizer agent has a weight average molecular weight of less than or 2,000 g/mol when determined by gel permeation chromatography using polystyrene standards. In an even further aspect, the epoxy hydrostabilizer agent has a weight average molecular weight of less than or 1,500 g/mol when determined by gel permeation chromatography using polystyrene standards. In a still further aspect, the epoxy hydrostabilizer agent has a weight average molecular weight of less than or 1,000 g/mol when determined by gel permeation chromatography using polystyrene standards.

In a further aspect, the epoxy hydrostabilizer agent has an epoxide gram equivalent weight (g/eq) from 400 g/eq to 2000 g/eq. In a still further aspect, the epoxy hydrostabilizer agent has an epoxide equivalent weight from 400 g/eq to 1000 g/eq.

In a further aspect, the epoxy hydrostabilizer agent is present in an amount from greater than 0 wt% to 3 wt%. In a still further aspect, the epoxy hydrostabilizer agent is present in an amount from greater than 0.5 wt% to 3.0 wt%. In a yet further aspect, the epoxy hydrostabilizer agent is present in an amount from greater than 1.0 wt% to 2.5 wt%.

In one aspect, the disclosed blended thermoplastic compositions comprise a glass fiber component. In a further aspect, the glass fiber used is selected from E-glass, S-glass, AR-glass, T-glass, D-glass and R-glass. In a still further aspect, the glass fiber used is selected from E-glass, S-glass, and combinations thereof. In a still further aspect, the glass fiber is one or more S-glass materials. High-strength glass is generally known as S-type glass in the United States, R-glass in Europe and T-glass in Japan. S-glass was originally developed for military applications in the 1960s, and a lower cost version, S-2 glass, was later developed for commercial applications. High-strength glass has appreciably higher amounts of silica oxide, aluminum oxide and magnesium oxide than E-glass. S-2 glass is approximately 40-70% stronger than E-glass. The glass fibers can be made by standard processes, e.g., by steam or air blowing, flame blowing, and mechanical pulling. Exemplary glass fibers for polycarbonate reinforcement are made by mechanical pulling.

The glass fibers may be sized or unsized. Sized glass fibers are coated on their surfaces with a sizing composition selected for compatibility with the polycarbonate. The sizing composition facilitates wet-out and wet-through of the polycarbonate upon the fiber strands and assists in attaining desired physical properties in the polycarbonate composition.

In various further aspects, the glass fiber is sized with a coating agent. In a further aspect, the coating agent is present in an amount from 0.1 wt% to 5 wt% based on the weight of the glass fibers. In a still further aspect, the coating agent is present in an amount from 0.1 wt% to 2 wt% based on the weight of the glass fibers.

In preparing the glass fibers, a number of filaments can be formed simultaneously, sized with the coating agent and then bundled into what is called a strand. Alternatively the strand itself may be first formed of filaments and then sized. The amount of sizing employed is generally that amount which is sufficient to bind the glass filaments into a continuous strand and ranges from 0.1 to 5 wt %, 0.1 to 2 wt % based on the weight of the glass fibers. Generally, this may be 1.0 wt % based on the weight of the glass filament.

In a further aspect, the glass fiber can be continuous or chopped. In a still further aspect, the glass fiber is continuous. In yet a further aspect, the glass fiber is chopped. Glass fibers in the form of chopped strands may have a length of 0.3 millimeter (mm) to 10 centimeters (cm), specifically 0.5 mm to 5 cm, and more specifically 1.0 mm to 2.5 cm. In various further aspects, the glass fiber has a length from 0.2 mm to 20 mm. In a yet further aspect, the glass fiber has a length from 0.2 mm to 10 mm. In an even further aspect, the glass fiber has a length from 0.7 mm to 7 mm. In this area, where a thermoplastic resin is reinforced with glass fibers in a composite form, fibers having a length of 0.4 mm are generally referred to as long fibers, and shorter ones are referred to as short fibers. In a still further aspect, the glass fiber can have a length of 1 mm or longer. In yet a further aspect, the glass fiber can have a length of 2 mm or longer.

In a further aspect, the glass fiber component is present in an amount from greater than 0 wt% to 60 wt%. In a still further aspect, the glass fiber component is present in an amount from greater than 10 wt% to 60 wt%. In a yet further aspect, the glass fiber component is present in an amount from greater than 20 wt% to 60 wt%. In an even further aspect, the glass fiber component is present in an amount from greater than 30 wt% to 60 wt%. In a still further aspect, the glass fiber component is present in an amount from greater than 30 wt% to 57 wt%.

In various further aspects, the glass fiber has a round (or circular), flat, or irregular cross-section. Thus, use of non-round fiber cross sections is possible. In a still further aspect, the glass fiber has a circular cross-section. In yet further aspect, the diameter of the glass fiber is from 1 to 15 micrometers (µm). In an even further aspect, the diameter of the glass fiber is from 4 to 10 µm. In a still further aspect, the diameter of the glass fiber is from 1 to 10 µm. In a still further aspect, the glass fiber has a diameter from 7 µm to 10 µm.

In addition to the foregoing components, the disclosed blended thermoplastic compositions can optionally comprise a balance amount of one or more additive materials ordinarily incorporated in polycarbonate resin compositions of this type, with the proviso that the additives are selected so as to not significantly adversely affect the desired properties of the polycarbonate composition. Combinations of additives can be used. Such additives can be mixed at a suitable time during the mixing of the components for forming the composition.
Exemplary and non-limiting examples of additive materials that can be present in the disclosed polycarbonate compositions include additional reinforcing fillers, an acid scavenger, anti-drip agent, antioxidant, antistatic agent, chain extender, colorant (e.g., pigment and/or dye), de-molding agent, flow promoter, lubricant, mold release agent, plasticizer, quenching agent, flame retardant stabilizer (including for example a thermal stabilizer, a hydrolytic stabilizer, or a light stabilizer), impact modifier, UV absorbing additive, and UV reflecting additive, or any combination thereof. In a further aspect, the additive is selected from an antioxidant, antistatic agent, chain extender, colorant, de-molding agent, dye, flow promoter, flow modifier, light stabilizer, lubricant, mold release agent, pigment, quenching agent, thermal stabilizer, UV absorbent substance, UV reflectant substance, and UV stabilizer, or combinations thereof.

In an aspect, impact modifiers can comprise an epoxy-functional block copolymer. The epoxy-functional block copolymer can comprise units derived from a C₂_₂₀ olefin and units derived from a glycidyl (meth)acrylate. Exemplary olefins include ethylene, propylene, butylene, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene.

In an aspect, pigments used for white coloring can be used such as zinc sulfide or titanium oxide or a combination thereof. Such pigments can be included from greater than 0% by weight to 10% by weight and increments with such a range. Other pigments such as black coloring (carbon black) can be used, for example, in ranges from greater than 0% by weight to 1% by weight.

In a further aspect, the disclosed blended thermoplastic compositions can further comprise a primary antioxidant or "stabilizer" (e.g., a hindered phenol) and, optionally, a secondary antioxidant (e.g., a phosphate and/or thioester). Suitable antioxidant additives include, for example, organic phosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3 ,5-di-tert-butyl-4-hydroxyphen yl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants.

Antioxidants are generally used in amounts of 0.01 wt% to 3 wt%, optionally 0.05 wt% to 2.0 wt% of the blended thermoplastic composition.

In a further aspect, the primary antioxidant is present in an amount from 0.01 wt% to 3 wt%. In another aspect, the primary antioxidant is present in an amount from 0.01 wt% to 2.5 wt%. In still another aspect, the primary antioxidant is present in an amount from 0.5 wt% to 2.5 wt%. In yet a further aspect, the primary antioxidant is present in an amount from 0.5 wt% to 2.0 wt%. In still another aspect, the primary antioxidant is present in an amount from 0.1 wt% to
0.5 wt%. In still another aspect, the primary antioxidant is present in an amount from 0.2 wt% to 0.5 wt%. In still another aspect, the primary antioxidant is present in an amount from 0.2 wt% to 0.4 wt%. In a yet further aspect, the primary anti- oxidant is present in an amount from 0.01 wt% to 0.50 wt%. In an even further aspect, the primary anti-oxidant is present in an amount from 0.05 wt% to 0.25 wt%.

In a further aspect, the secondary antioxidant is present in an amount from 0.01 wt% to 3.0 wt%. In another aspect, the secondary antioxidant is present in an amount from 0.01 wt% to 2.5 wt%. In still another aspect, the secondary antioxidant is present in an amount from 0.5 wt% to 2.5 wt%. In yet another aspect, the secondary antioxidant is present in an amount from 0.5 wt% to 2.0 wt%. In still another aspect, the secondary antioxidant is present in an amount from 0.05 wt% to 0.4 wt%. In still another aspect, the secondary antioxidant is present in an amount from 0.05 wt% to 0.2 wt%. In a yet further aspect, the secondary anti- oxidant is present in an amount from 0.01 wt% to 0.50 wt%. In an even further aspect, the secondary anti-oxidant is present in an amount from 0.05 wt% to a0.25 wt%.

In various aspects, the disclosed blended thermoplastic compositions further comprise a hydrolytic stabilizer, wherein the hydrolytic stabilizer comprises a hydrotalcite and an inorganic buffer salt. In a further aspect, the disclosed polycarbonate blend composition comprises a hydrolytic stabilizer, wherein the hydrolytic stabilizer comprises one or more hydrotalcites and an inorganic buffer salt comprising one or more inorganic salts capable of pH buffering. Either synthetic hydrotalcites or natural hydrotalcites can be used as the hydrotalcite compound in the present disclosure. Exemplary hydrotalcites that are useful in the compositions of the present are commercially available and include, but are not limited to, magnesium hydrotalcites such as DHT-4C (available from Kyowa Chemical Co.); Hysafe 539 and Hysafe 530 (available from J.M. Huber Corporation).

In a further aspect, suitable thermal stabilizer additives include, for example, organic phosphites such as triphenyl phosphite, tris-(2,6-dimethylphenyl)phosphite, tris-(mixed mono-and di-nonylphenyl)phosphite or the like; phosphonates such as dimethylbenzene phosphonate or the like, organic phosphates such as trimethyl phosphate, thioesters such as pentaerythritol beta-laurylthiopropionate, and the like, or combinations comprising at least one of the foregoing thermal stabilizers.

Thermal stabilizers are generally used in amounts of 0.01 wt% to 5 wt%, optionally 0.05 wt% to 2.0 wt% of the polycarbonate blend composition. In one aspect, the thermal stabilizer is present in an amount from 0.01 wt% to 3.0 wt%. In another aspect, the thermal stabilizer is present in an amount from 0.01 wt% to 2.5 wt%. In still another aspect, the thermal stabilizer is present in an amount from 0.5 wt% to 2.5 wt%. In still another aspect, the thermal stabilizer is present in an amount from 0.5 wt% to 2.0 wt%. In still another aspect, the thermal stabilizer is present in an amount from 0.1 wt% to 0.8 wt%. In still another aspect, the thermal stabilizer is present in an amount from 0.1 wt% to 0.7 wt%. In still another aspect, the thermal stabilizer is present in an amount from 0.1 wt% to 0.6 wt%. In still another aspect, the thermal stabilizer is present in an amount from 0.1 wt% to 0.5 wt%. In still another aspect, the thermal stabilizer is present in an amount from 0.1 wt% to 0.4 wt%. In still another aspect, the thermal stabilizer is present in an amount from 0.05 wt% to 1.0 wt%.

In various aspects, plasticizers, lubricants, and/or mold release agents additives can also be used. There is a considerable overlap among these types of materials, which include, for example, phthalic acid esters such as dioctyl-4,5-epoxy-hexahydrophthalate; tris(octoxycarbonylethyl)isocyanurate; tristearin; di- or polyfunctional aromatic phosphates such as resorcinol tetraphenyl diphosphate (RDP), the bis(diphenyl)phosphate of hydroquinone and the bis(diphenyl)phosphate of bisphenol-A; poly-alpha-olefins; epoxidized soybean oil; silicones, including silicone oils; esters, for example, fatty acid esters such as alkyl stearyl esters, e.g. methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof; waxes such as beeswax, montan wax, paraffin wax or the like.

Blended thermoplastic composition additives such as plasticizers, lubricants, and/or mold release agents additive are generally used in amounts of 0.01 wt% to 20 wt%, optionally 0.5 wt% to 10 wt% the polycarbonate blend composition. In one aspect, the mold release agent is methyl stearate; stearyl stearate or pentaerythritol tetrastearate. In another aspect, the mold release agent is pentaerythritol tetrastearate.

In various aspects, the mold release agent is present in an amount from 0.01 wt% to 3.0 wt%. In another aspect, the mold release agent is present in an amount from 0.01 wt% to 2.5 wt%. In still another aspect, the mold release agent is present in an amount from 0.5 wt% to 2.5 wt%. In still another aspect, the mold release agent is present in an amount from 0.5 wt% to 2.0 wt%. In still another aspect, the mold release agent is present in an amount from 0.1 wt% to 0.6 wt%. In still another aspect, the mold release agent is present in an amount from 0.1 wt% to 0.5 wt%.

In various aspects, the blended thermoplastic compositions of the present disclosure can optionally comprise a flame retardant, wherein the flame retardant can comprise any flame retardant material or mixture of flame retardant materials suitable for use in the inventive polymer compositions. In one aspect, the blended thermoplastic compositions of the present disclosure do not comprise a flame retardant.

In various aspects, the flame retardant is a phosphorus-containing flame retardant. In a further aspect, the flame retardant is selected from an oligomeric phosphate flame retardant, polymeric phosphate flame retardant, an aromatic polyphosphate flame retardant, oligomeric phosphonate flame retardant, phenoxyphosphazene oligomeric flame retardant, or mixed phosphate/phosphonate ester flame retardant compositions.

In a further aspect, the blended thermoplastic compositions comprise a flame retardant that is a non-brominated and non-chlorinated phosphorous-containing compound such as an organic phosphate. Exemplary organic phosphates can include an aromatic phosphate of the formula (G0)₃P=0, wherein each G is independently an alkyl, cycloalkyl, aryl, alkaryl, or aralkyl group, provided that at least one G is an aromatic group. Two of the G groups can be joined together to provide a cyclic group, for example, diphenyl pentaerythritol diphosphate, which is described by Axelrod in U.S. Pat. No. 4,154,775. Other suitable aromatic phosphates can be, for example, phenyl bis(dodecyl)phosphate, phenyl bis(neopently)phosphate, phenyl bis(3,5,5' -trimethylhexyl)phosphate, ethyl diphenyl phosphate, 2-ethylhexyl di(p-tolyl)phosphate, bis (2-ethylhexyl)p-tolyl phosphate, tritolyl phosphate, bis(2-ethylhexyl)phenyl phosphate, dibutyl phenyl phosphate, 2-chloroethyl diphenyl phosphate, p-tolyl bis(2,5,5' -trimethylhexyl)phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

In a further aspect, di- or polyfunctional aromatic phosphorous-containing compounds can also be present. Examples of suitable di- or polyfunctional aromatic phosphorous-containing compounds include triphenyl phosphate (TPP), resorcinol tetraphenyl diphosphate (RDP), the bis(diphenyl)phosphate of hydroquinone and the bis(diphenyl)phosphate of bisphenol-A, respectively, their oligomeric and polymeric counterparts, and the like.

In a further aspect, the flame retardant can be an organic compound containing phosphorous-nitrogen bonds. For example, phosphonitrilic chloride, phosphorous ester amides, phosphoric acid amides, phosphonic acid amides, phosphinic acid amides, tris(aziridinyl)phosphine oxide, or the like. In one aspect, a phenoxyphosphazene is used as a flame retardant.

In an aspect, nitrogen flame retardants such as melamime cyanurate can be used. In a further aspect, the aromatic cyclic phosphazene comprises at least one compound represented by one of the phosphazene formulas described herein as a main component. In various aspects, the content of the aromatic cyclic phosphazene composition is 90 wt%. In a further aspect, the content of the aromatic cyclic phosphazene composition is 95 wt%. In a still further aspect, the content of the aromatic cyclic phosphazene composition is 100 wt%.

Other components in the aromatic cyclic phosphazene composition are not specifically limited as long as the object of the present disclosure is not impaired. Aromatic cyclic phosphazene-containing flame retardant useful in the present disclosure are commercially available. Suitable examples of such commercial products include "Rabitle FP-110" and "Rabitle FP-390" manufactured by FUSHIMI Pharmaceutical Co., Ltd.

In a further aspect, the phosphorus-containing flame retardant is selected from a phosphine, a phosphine oxide, a bisphosphine, a phosphonium salt, a phosphinic acid salt, a phosphoric ester, and a phosphorous ester.

In a further aspect, the flame retardant is present in an amount from greater than 0 wt% to 20 wt%. In a still further aspect, the flame retardant is present in an amount from 0.01 wt% to 15 wt%. In a yet further aspect, the flame retardant is present in an amount from 0.1 wt% to 15 wt%. In an even further aspect, the flame retardant is present in an amount from 1wt% to 15 wt%.

In a further aspect, an anti-drip agent can also be present. In a further aspect, the anti-drip agent is a styrene-acrylonitrile copolymer encapsulated polytetrafluoroethylene. Exemplary anti-drip agents can include a fibril forming or non-fibril forming fluoropolymer such as polytetrafluoroethylene (PTFE). The anti-drip agent can optionally be encapsulated by a rigid copolymer, for example styrene-acrylonitrile (SAN). PTFE encapsulated in SAN is known as 'TSAN." Encapsulated fluoropolymers can be made by polymerizing the encapsulating polymer in the presence of the fluoropolymer, for example, in an aqueous dispersion. TSAN can provide significant advantages over PTFE, in that TSAN can be more readily dispersed in the composition. A suitable TSAN can comprise, for example, 50 wt % PTFE and 50 wt % SAN, based on the total weight of the encapsulated fluoropolymer. Alternatively, the fluoropolymer can be pre-blended in some manner with a second polymer, such as for, example, an aromatic polycarbonate resin or SAN to form an agglomerated material for use as an anti-drip agent. Either method can be used to produce an encapsulated fluoropolymer.

In a further aspect, the anti-drip agent is present in an amount from 0.01 wt% to 3 wt%. In a still further aspect, the anti-drip agent is present in an amount from 0.01 wt% to 2.5 wt%. In yet a further aspect, the anti-drip agent is present in an amount from 0.5 wt% to 2.0 wt%.

In various aspects, the blended thermoplastic compositions of the present disclosure can optionally further comprise reinforcing fillers in addition to one or more glass fiber fillers as described herein above. For example, suitable fillers or reinforcing agents include any materials known for these uses, provided that they do not adversely affect the desired properties. For example, suitable fillers and reinforcing agents include silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as Ti0₂, aluminum oxide, magnesium oxide, or the like; calcium sulfate (as its anhydride, dehydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix resin, or the like; single crystal fibers or "whiskers" such as silicon carbide, alumina, boron carbide, iron, nickel, copper, or the like; fibers (including continuous and chopped fibers) such as asbestos, carbon fibers; sulfides such as molybdenum sulfide, zinc sulfide, or the like; barium compounds such as barium titanate, barium ferrite, barium sulfate, heavy spar, or the like; metals and metal oxides such as particulate or fibrous aluminum, bronze, zinc, copper and nickel, or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as kenaf, cellulose, cotton, sisal, jute, flax, starch, corn flour, lignin, ramie, rattan, agave, bamboo, hemp, ground nut shells, corn, coconut (coir), rice grain husks or the like; organic fillers such as polytetrafluoroethylene, reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, Tripoli, diatomaceous earth, carbon black, or the like, or combinations comprising at least one of the foregoing fillers or reinforcing agents. In a still further aspect, the filler is talc, glass fiber, kenaf fiber, or combinations thereof. In yet a further aspect, the filler is glass fiber. The fillers and reinforcing agents can be coated with a layer of metallic material to facilitate conductivity, or surface treated with silanes, siloxanes, or a combination of silanes and siloxanes to improved adhesion and dispersion with the polymeric matrix resin.

In a further aspect, the additional reinforcing filler is selected from carbon fiber, a mineral filler, or combinations thereof. In a still further aspect, the reinforcing filler is selected from mica, talc, clay, wollastonite, zinc sulfide, zinc oxide, carbon fiber, ceramic fiber, ceramic-coated graphite, titanium dioxide, or combinations thereof.

In a further aspect, the reinforcing fillers can be provided in the form of monofilament or multifilament fibers and can be used either alone or in combination with other types of fiber, for example, co-weaving or core/sheath, side-by-side, orange-type or matrix and fibril constructions, or by other methods known to one skilled in the art of fiber manufacture. Suitable co-woven structures include, for example, glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

In one aspect, the reinforcing fillers can be surface-treated with a surface treatment agent containing a coupling agent. Suitable coupling agents include, but are not limited to, silane-based coupling agents, or titanate-based coupling agents, or a mixture thereof. Applicable silane-based coupling agents include aminosilane, epoxysilane, amidosilane, azidosilane and acrylsilane.

In various aspects, the surface coating can range in amount from 0.1 wt% to 5.0 wt% of the total weight of the filler and surface coating. In a further aspect, the surface coating can range in amount from 0.1 wt% to 2.0 wt% of the total weight of the filler and surface coating.

In a further aspect, the reinforcing filler is particulate. In a further aspect, the reinforcing filler is fibrous. In a still further aspect, the fibrous filler has a circular cross-section. In yet a further aspect, the fibrous filler has a non-circular cross-section. In a further aspect, the additional reinforcing filler is a carbon fiber. In a still further aspect, the carbon fiber is continuous. In yet a further aspect, the carbon fiber is chopped. In an even further aspect, the carbon fiber has a round, flat, or irregular cross-section. In a still further aspect, the carbon fiber has a round cross-section. In yet a further aspect, the carbon fiber has a diameter from 4 µm to 15 µm.

The blended thermoplastic compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between 230°C and 350°C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Compositions can be manufactured by various methods. For example, the polycarbonate polymer, polyester polymer, the flame retardant, the reinforcing filler and/or other optional components are first blended in a HENSCHEL-Mixer™ high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat and/or downstream through a sidestuffer. Additives can also be compounded into a masterbatch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate can be one- fourth inch long or less as desired. Such pellets can be used for subsequent molding, shaping, or forming.

In one aspect, the present disclosure pertains to shaped, formed, or molded articles comprising the blended thermoplastic compositions. The blended thermoplastic compositions can be molded into useful shaped articles by a variety of means such as injection molding, extrusion, rotational molding, blow molding and thermoforming to form articles and structural components such as, for example, personal computers, notebook and portable computers, and other such equipment, medical applications, RFID applications, automotive applications, and the like, in particular NMT applications. In a further aspect, the article is extrusion molded. In a still further aspect, the article is injection molded.

In a further aspect, the resulting disclosed compositions can be used to provide any desired shaped, formed, or molded articles. For example, the disclosed compositions can be molded into useful shaped articles by a variety of means such as injection molding, extrusion, rotational molding, blow molding and thermoforming. As noted above, the disclosed compositions are particularly well suited for use in the manufacture of electronic components and devices. As such, according to some aspects, the disclosed compositions can be used to form articles such as printed circuit board carriers, burn in test sockets, flex brackets for hard disk drives, and the like.

Without further elaboration, it is believed that one skilled in the art can, using the description herein, utilize the present disclosure. The following examples are included to provide addition guidance to those skilled in the art of practicing the claimed disclosure. The examples provided are merely representative of the work and contribute to the teaching of the present disclosure. Accordingly, these examples are not intended to limit the disclosure in any manner.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers *(e.g.,* amounts, temperature, etc.), but some errors and deviations should be accounted for. Unless indicated otherwise, parts are parts by weight, temperature is in °C or is at ambient temperature, and pressure is at or near atmospheric.
Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The materials shown in Table 1 were used to prepare certain compositions described and evaluated herein.

**Table 1**

| function | Item | chemical descri12tion | Exam12le source, vendor |
|---|---|---|---|
| Main resin | PBT | Polybutylene terephthalate, MW range from 150,000 to 30,000D | SABIC |
| 2^{nd} Polymeric phase | PET | IV range: 0.9-0.3 | Foshan Honghua Polyester Chip Co. Ltd |
| | ITR9010 | polymer from resorcinol, bisphenol A, p-cumylphenol, DAC, and phosgene, SLX 90/10 PCP capped 20M powder | SABIC |
| | PST | DAC-Resorcinol-Siloxane- BPA Polyester-Polycarbonate: 1% D1O 9010 24.5M | SABIC |
| | PEI | Polyetherimide | ULTEMᵤᵥᵢ 1010 Resin, SABIC |
| | HFD-PC | Polycarbonate copolymer, Poly (bisphenol-A-carbonate) | LEXAN_{lM} ML7683 - 111N, SABIC |
| FR additive | TPPO | Triphenylphosphine oxide | Shanghai Weifang Chemical Co., Ltd. |
| | MC | Melamine cyanurate | Shouguang Weidong Chemical Co., Ltd. |
| Fillers | GFl | PBT 1Oum E-GF | ECS303-H, Chongqing |
| | | | |

| | | | Polycomp. International Corp. |
|---|---|---|---|
| | GF2 | PBT 7um E-GF | ECS-301HP (E), Chongqing Polycomp. International Corp. |
| | GF3 | Owens Coming HPXSS PAX95 1Oµm 4mm CS | Owens Coming |
| | GF4 | Flat glass | Nittobo, CSG 3PA-830 |
| | MN1 | uncoated talc, having a diameter of 1 µm | Ultratalc ® 609, Barretts Minerals, Inc. |
| | MN2 | wollastonite, mineral | NYAD M325, Minera NYCO, S.A. DE C.V. |
| Enhancer | EH1 | Hytrel 4056 | DuPont |
| Impact modifiers | IM1 | Ethylene-EthylAcrylate Copolymer with EA below 20% | EXL3330, ROHM AND HAAS CHINA HOLDING CO., LTD |
| | IM2 | TERPOLYMER : ETHYLENE-METHYL ACRYLATE - GLYCIDYL METHACRYLATE | LOTADER® AX 8900, Arkema Inc. |
| | IM3 | Lexan PC/20% EMA-GMA concentrate | SABIC |
| Epoxy | EH2 | DER 661, diglycidylether of bisphenol A, MW-1000 | Dow Chemical |
| Heat stabilizer | HSI | Tris(2,4-ditert-butylphenyl) phosphite | Irgafos 168, BASF |
| | HS2 | Benzenepropanoic acid, 3,5-bis(1,1-dimethylethyl)-4-hydroxy-, 1,1'-[2,2-bis[[3-[3,5-bis(1,1-dimethylethyl)-4-hydroxyphenyl]-1-oxopropoxy]methyl]-1,3-propanediyl] ester | Irgafos 1010, BASF |
| Quencher | TQ | Mono zinc phosphate | Z21-82, BUDENHEIM IBERICA, S.L. Soc. en Comandita |
| | NA | SODIUM STEARATE | SODIUM STEARATE T1, Crompton Specialties Holdings Ltd |
| Pigments | PM1 | Zinc Sulfide | Sachtolith, Sachtleben Corporation |
| | PM2 | CARBON BLACK | Carbon Black, Cabot Corporation |

In an aspect, nano injection molding process and bonding strength testing were conducted at SABIC. The treated aluminum metal parts were commercially available Injection molding trial was completed at SABIC under the molding conditions as shown in the table below. Then bonding strength was measured by using a UTM tensile machine. As for the tensile stress, the subject composite was stretched, a shear force was applied, and a
shear force at the time of rupture was taken as a shear stress. The shear force was measured at a tension rate of 5mm/s. Such a bonding strength test is referred to herein as the SABIC procedure.

Tables 2-3 illustrate example process conditions for samples shown in Table 4 as well as comparative examples. Table 4 illustrates sample formulations and resultant bonding strength tests.

**Table 2**

| Material | Dry (OC) | Processing Tem12 (°C) | Tool Tem12 | Injection s12eed | Fill time | Max P |
|---|---|---|---|---|---|---|
| | | | Cav/Core (°C) | (mm/s) | (sec) | (bar) |
| S1-4 | 120-140 | 280-280-280-270-260 | 140/140 | 80-100 | 0.15-0.25 | 60-97 |
| 30% GF reinforced PBT | 120 | 270-270-270-260-250 | 140/140 | 80-100 | 0.16 | 75 |
| 30% GF reinforced PPS | 100 | 330-330-330-320-310 | 140/140 | 80 | 0.18 | 63 |

In an aspect, nano injection molding process and bonding strength testing were conducted at an SABIC cooperator. The treated aluminum metal parts were commercially available. Injection molding trial was completed at the SABIC cooperator under the molding conditions as shown in Table 3 below.

**Table 3**

| Material | Processing Tem12 (°C) | Tool Tem12Cav/Core | Injection s12eed | Anneal | Max P (bar) |
|---|---|---|---|---|---|
| | | (°C) | (mm/s) | | |
| S2, S4 | 280.270.260.250 | 155-160 | 50 | 160°C/40min | 140 |
| S6 | 275-265-255-245 | 155-160 | 50 | 160°C/40min | 140 |

**Table 4**

| Description | Unit | S1 | S2 | S3 | S4 | SS | S6 | S7 | SS | S9 | S10 | S11 | S12 | S13 | S14 |
|---|---|---|---|---|---|---|---|---|---|---|---|---|---|---|---|
| PBT 315 | % | | | | | 36.85 | 10 | | | | | | | | |
| PBT 195 FINE GRIND | % | 41.15 | 39.65 | 41.6 | 39.15 | | 44.35 | 31.5 | 62.9 | 62.9 | 62.9 | 62.9 | 62.9 | 44.03 | 44.03 |
| PBT176, PBT315 | % | | | | | | | 31.5 | | | | | | | |
| PET high IV | % | 8 | 7 | | | | | | | | | | | | |
| High flow HFD | % | | | 11 | 10 | | | | | | | | | | |
| PEI | % | | | | | 5 | 5 | | | | | | | 11.87 | |
| ITR/FST | % | | | | | | | | | | | | | | 11.87 |
| PBT 1Oum E-GF | % | 38 | 36 | | | 33 | 30 | 30 | | | | 15 | 15 | 30 | 30 |
| PBT 7um E-GF | % | | | | | | | | 30 | | | | | | |
| Owens Corning HPXSS PAX95 1Oµm 4mm CS | % | | | 35 | 33.5 | | | | | 30 | | | | | |
| Flat glass | % | | | | | | | | | | 30 | | | | |
| R7surface treated talc | % | | | | | | | | | | | 15 | | | |
| wollastonite, mineral | % | | | | | | | | | | | | 15 | | |
| Melamine cyanurate | % | | | | | 10 | 4 | | | | | | | | |
| Triphenylphosphine oxide | % | | | | | 15 | 5 | | | | | | | | |
| Dupont Hytrel 4056 | % | 3 | 3 | 3 | 3 | | | | | | | | | | |
| Ethylene-EthylAcrylate Copolymer with EA below 20% | % | 2.2 | 2.2 | 2.2 | 2.2 | | | | | | | | | | |
| EMA-GMA IM | % | | | | | | 1.5 | 2 | 2 | 2 | 2 | 2 | 2 | 2 | 2 |
| GE PC/20% EMA-OMA concentrate | % | 5.3 | 5.3 | 5.3 | 5.3 | | | | | | | | | | |
| DER 661, diglycidylether of bisphenol A, MW-1000 | % | 1.5 | 1.5 | 1.5 | 1.5 | | | | | | | | | | |
| Irgafos 168 | % | 0.05 | 0.05 | 0.05 | 0.05 | | | | | | | | | | |
| HINDERED PHENOL STABILIZER | % | 0.15 | 0.15 | 0.15 | 0.15 | 0.15 | 0.15 | 0.1 | 0.1 | 0.1 | 0.1 | 0.1 | 0.1 | 0.1 | 0.1 |
| MZP | % | 0.1 | 0.1 | 0.1 | 0.1 | | | | | | | | | | |
| SODIUM STEARATE TI | % | 0.05 | 0.05 | 0.05 | 0.05 | | | | | | | | | | |
| ZnS | % | | 5 | | 5 | | 5 | 5 | 5 | 5 | 5 | 5 | 5 | 5 | 5 |
| CARBON BLACK.MEDIUM COLOR POWDER | % | 0.5 | | 0.5 | | | | | | | | | | | |
| | | | | | | | | | | | | | | | |
| *Bonding strength tested at SABIC* | *N* | 754 | | 542 | 985 | | | | | | | | | | |
| *Bonding strength tested at SABIC* | *MPa* | | | | | | | 28.0 | | 25.0 | | | | | |
| *Standard Deviation* | *MPa* | | | | | | | 2.2 | | 1.3 | | | | | |
| *Bonding strength tested at SABIC cooperator* | *MPa* | | 27.7 | | 28.3 | 19.8 | 29.6 | | | | | | | | |

Table 5 illustrates side-by-side comparison of bonding strength of two commercial products.

**Table 5**

| | | *30% GF reinforced PET* | *30% GF reinforced PPS* |
|---|---|---|---|
| *Bonding strength tested at SABIC* | *N* | *458* | *849* |

As illustrated in Table 4, samples S1, S3 and S4 provide good bonding strength. By comparing S3 with S4, the bonding strength from S4 is higher than the one from S3, indicating ZnS has a synergy with the resins here to promote the bonding strength. The bonding strength is varied based on the selection of building blocks. By selecting building blocks for the **PBT** based blends, high bonding strength between metal and plastics for NMT-method can be achieved while with additional value propositions, such as high impact, excellent color ability, superior FR performance, improved heat and shrinkage, etc.

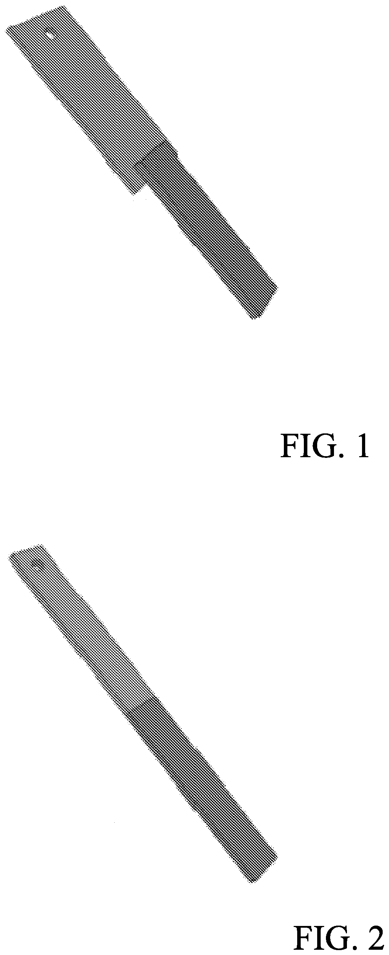

As used herein, the SABIC procedure to measure bonding strength is related to the ISO 19095, the standard of 'Evaluation of the adhesion interface performance in plastic-metal assemblies," which is currently being developed, and which is considered the bar test widely accepted by the industry. FIGS. 1-2 shows the diagram of two types of bar parts used, with FIG. 1 illustrating a lap joint and FIG. 2 illustrating a butt joint. The SABIC procedure to measure bonding strength is described herein and is presented below:
i) Pre-treatment on the metal parts to create nano- and micro- sized holes on metal surface by chemical etching process;
ii) Within effective treatment timeframe, plastic is injection-molded onto the pre- treated aluminum insets;
iii) Bonding force is measured by recording the force when the molded parts are pulled until the breaking point on a standard tensile test machine; and
iv) Bonding strength is calculated (e.g., to MPa unit) accordingly by using bonding force divided by bonding area.

The materials shown in Table 6 were used to prepare certain compositions described and evaluated herein.

**Table 6**

| Function | Item | chemical descri12tion | Exam12le source, | Weight % |
|---|---|---|---|---|
| | | | vendor | range |
| Main resin | PBT1 | Polybutylene terephthalate, Polybutylene Terephthalate (PBT) sold by SABIC Innovative Plastics as VALOX 195 with an intrinsic viscosity of 0.66 cm3/g as measured in a 60:40 phenol/tetrachloroethane. | SABIC Innovative Plastics | 1-99 |
| | PBT2 | Polybutylene terephthalate, sold by SABIC Innovative Plastics as VALOX 315 with intrinsic viscosity of 1.2 cm3/g as measured in a 60:40 phenol/tetrachloroethane | SABIC Innovative Plastics | 0-99 |
| 2nd Polymeric phase | PET | Poly(ethyleneterephthalate), IV range: 0.9-0.3 | INVISTA SARL | 0-99 |
| | PETG | PETG CO-POLYESTER | Eastman Chemical | 0-50 |
| | Tritan | 1,4-benzenedicarboxylic acid, dimethyl ester, polymer with 1,4-CHDM and 2,2,4,4-TMCBD | Eastman Chemical | 0-50 |
| | PCCD | poly(1,4-cyclohexylenedimethylene 1-4,cyclohexanedicarboxylate), 2000 poise | Neostar, Eastman Chemical | 0-50 |
| | SLX | polymer from resorcinol, bisphenol A, p-cumylphenol, DAC, and phosgene, SLX 90/10 PCP capped 20M powder | SABIC Innovative Plastics | 0-50 |
| | PEI | Polyetherimide, ULTEM™ 1010 Resin, Mw | SABIC Innovative Plastics | 0-30 |
| | | | | |
| | XHT-PC | PPPBP (N-Phenylphenolphthaleinylbisphenol, 2,2-Bis(4-hydro)-Bisphenol A Copolymer, 32 mol % PPPBP, Mw about 23,000 g/mol, interfacial polymerization, PCP end-capped, PDI = 2-3 | SABIC Innovative Plastics | 0-30 |
| Fillers | GF1 | PBT lOum E-GF | ECS303-H, Chongqing Polycomp. International Corp. | 1-60 |
| | GF2 | 10µm S-Glass fiber | HPXSS PAX95, Owens Corning | 0-60 |
| | GF3 | E-glass fiber, 'flat' cross session | CSG 3PA-830, NITTO BOSEKI Co.,Ltd. | 0-60 |
| | GF4 | Glass flake, 5 µm thickness x longer diameter 600 µm | MEG 160FYX, Nippon Sheet Glass Co. | 0-60 |
| | GF5 | Glass bead, D50: 30-50 µm | Spheriglass 3000, Potters Industries Inc. | 0-60 |
| | GF6 | special glass fiber for low Dk/Df | | 0-60 |
| | MN1 | uncoated talc, D50 -1 µm | Ultratalc 609, Barretts Minerals, Inc. | 0-60 |
| | MN2 | wollastonite | NYAD M325, NYCO Co. | 0-60 |
| Enhancer | EH1 | OLYBUTYLENE TERE/ISOPHTHALATE-CO-POLYOXYBUTYLENE | Hytrel 4056, DuPont | 0-10 |
| | EH2 | POE, Polyolefin Elastomer | ENGAGE* 8401, Dow Chemical Company | 0-10 |
| Impact modifiers | IM1 | Ethylene-EthylAcrylate Copolymer with EA below 20% | EXL3330, ROHM AND HAAS CHINA HOLDING CO., LTD | 0-30 |
| | IM2 | TERPOLYMER : ETHYLENE- METHYL ACRYLATE -GLYCIDYL METHACRYLATE | LOTADER® AX 8900, Arkema Inc. | 0-20 |
| Epoxy silane | ES | Beta-(3,4-Epoxycyclohexyl)ethyltrimethoxysilane | SILQUEST A186, Momentive | 0-5 |
| Heat stabilizer | HSI | pentaerythritol-tetrakis(3-(3 ,5-di-tert.butyl-4-hydroxy-phenyl-)propionate) | Irgafos 168, BASF | 0-1 |
| | HS2 | tris(2,4-di-t-butylphenyl)phosphite | Irgafos 1010, BASF | 0-1 |
| Quencher | TQ | Mono zinc phosphate | Z21-82, BUDENHEIM IBERICA, S.L. Soc. en Comandita | 0-1 |
| | NA | SODIUM STEARATE | SODIUM STEARATE T1, Crompton Specialties Holdings Ltd | 0-1 |
| UV stabilizer | UV | 2-(2'HYDROXY-5-T-OCTYLPHENYL)-BENZOTRIAZOLE, UV 5411 | UVA 5411, CLARIANT GUANGZHOU MASTERBATCH LTD. | 0-1 |
| Pigments | PM1 | Zinc Sulfide | Sachtolith, Sachtleben Corporation | 0-10 |
| | PM2 | CARBON BLACK | Carbon Black, Cabot Corporation | 0-5 |

PBT Mw in two different ranges were studied as shown in SN1, 2 and 3 from Table 7. High Mw PBT has negative effects on bonding and flow. It is suggested the blends have PBT MW not higher than 80,000D in order to achieve high bonding strength and good flow performance for the metal/plastic hybrid.

**Table 7: PBT Mw effects on bonding strength and mechanical properties**

| Item | chemical descri12tion | Unit | SNI | SN2 | SN3 |
|---|---|---|---|---|---|
| PBTI | Polybutylene terephthalate, intrinsic viscosity of 0.66 cm³/g as measured in a 60:40 phenol/tetrachloroethane. | % | 62.1 | 31.0 | |
| PBT2 | Polybutylene terephthalate, intrinsic viscosity of 1.2cm3/g as measured in a 60:40 phenol/tetrachloroethane. | % | | 31.1 | 62.1 |
| GFI | PBT IOµm E-GF | % | 30 | 30 | 30 |
| EHI | OLYBUTYLENE TERE/ISO PHTHALATE-CO-POLYOXYBUTYLENE | % | 2.5 | 2.5 | 2.5 |
| IMI | Ethylene-EthylAcrylate Copolymer with EA below 20% | % | 2 | 2 | 2 |
| IM2 | TERPOLYMER : ETHYLENE-METHYL ACRYLATE - GLYCIDYL METHACRYLATE | % | 3 | 3 | 3 |
| HSI | pentaerythritol- tetrakis(3-(3,5-di-tert.butyl-4-hydroxy-phenyl-)propionate) | % | 0.15 | 0.15 | 0.15 |
| HS2 | tris(2,4-di-t-butylphenyl)phosphite | % | 0.05 | 0.05 | 0.05 |
| UV | 2-(2'HYDROXY-5-T-OCTYLPHENYL)-BENZOTRIAZOLE, UV 5411 | % | 0.25 | 0.25 | 0.25 |
| | *Bonding Strength on lapjoint parts* | | | | |
| | Bar bonding strength -average | MPa | 27.0 | 28 | 22 |
| | Bar bonding strength -standard deviation | MPa | 1.5 | 1.2 | 1.4 |
| | *Mechanical property* | | | | |
| | MVR (270C/5kg) | cc/10' | 38 | 14 | 4 |
| | Tensile Modulus | MPa | 8200 | 8200 | 7800 |
| | Tensile Stress | MPa | 118 | 112 | 106 |
| | Tensile Elongation | % | 3.0 | 3.4 | 3.7 |
| | Notched Impact strength | *Jim* | 141 | 166 | 212 |

It is well known that impact modifiers can improve impact strength performance. It is surprisingly found that selective impact modifiers can also improve bonding strength performance as shown in Table 8. EH1 additive also outperformed EH2 in terms of notched izod impact strength and bonding strength.

**Table 8: Impact modifier and other additive effects on bonding strength\mechanical property.**

| Item | chemical descri12tion | Unit | SN4 | SNS | SN6 | SN7 | SN8 |
|---|---|---|---|---|---|---|---|
| PBTI | Polybutylene terephthalate, intrinsic viscosity of .66 cm3/g as measured in a 60:40 phenol/tetrachloroethane | % | 64.8 | 61.8 | 62.3 | 37.2 | 37.2 |
| PET | Poly(ethyleneterephthalate), IV range: 0.9-0.3 | % | | | | 15.0 | 15.0 |
| SLX | polymer from resorcinol, bisphenol A, p-cumylphenol, DAC, and phosgene, SLX 90/10 PCP capped 20M powder | % | | | | 10.0 | 10.0 |
| GFI | PBT 1OumE-GF | % | 30 | 30 | 30 | | |
| GF3 | E-glass fiber, 'flat' cross session | % | | | | 30 | 30 |
| EHI | OLYBUTYLENE TERE/ISO PHTHALATE-CO-POLYOXYBUTYLENE | % | | | 2.5 | 2.5 | |
| EH2 | POE | % | | | | | 2.5 |
| IMI | Ethylene-EthylAcrylate Copolymer with EA below 20% | % | | | 2 | 2 | 2 |
| IM2 | TERPOLYMER : ETHYLENE-METHYL ACRYLATE - GLYCIDYL METHACRYLATE | % | | 3 | 3 | 3 | 3 |
| TQ | Mono zinc phosphate | | | | | 0.1 | 0.1 |
| HSI | pentaerythritol- tetrakis(3-(3,5-di-tert.butyl-4-hydroxy-phenyl-)propionate) | % | 0.15 | 0.15 | 0.15 | 0.15 | 0.15 |
| HS2 | tris(2,4-di-t-butylphenyl)phosphite | % | 0.05 | 0.05 | 0.05 | 0.05 | 0.05 |
| PMI | Zinc Sulfide | % | 5 | 5 | | | |
| | *Bonding Strength on lapjoint parts* | | | | | | |
| | Bar bonding strength -average | MPa | 20 | 25 | 25 | 32 | 29 |
| | Bar bonding strength -standard deviation | MPa | 3.3 | 3.0 | 2.2 | 0.6 | 0.7 |
| | *Mechanical property* | | | | | | |
| | MVR (270C/5kg) | cc/10' | 52 | 34 | 20 | 37 | 31 |
| | Tensile Modulus | MPa | 7928 | 8825 | 7900 | 8400 | 8186 |
| | Tensile Stress | MPa | 111 | 129 | 115 | 104 | 98 |
| | Tensile Elongation | % | 2.5 | 2.8 | 3.1 | 2.4 | 2.3 |
| | Notched Impact strength | *Jim* | 80 | 112 | 142 | 125 | 107 |

Various glass fibers (E glass, S glass), glass shape (round glass fiber, flat glass fiber, glass flake and glass bead) and combination of glass and mineral were studied on bonding strength and mechanical property. From the results at Table 9, the findings are: (i) no significant difference is found from 20% to 40% E-GF loading in terms of bonding strength; (ii) glass shape can cause the differences, with glass bead showing the least bonding strength and mechanical property; (iii) no significant difference is found between S-GF, E-GF and the special glass fiber for low Dk/Df; and (iv) mixture of mineral and E-GF showed poor bonding strength.

**Table 9: Filler effects on bonding strength and mechanical property**

| Item | chemical descri12tion | unit | SN .2 | SN 10 | SN 11 | SN 12 | SN .L1. | SN 14 | SN 15 | SN 16 | SN 17 | SN |
|---|---|---|---|---|---|---|---|---|---|---|---|---|
| PBT1 | Polybutylene terephthalate, intrinsic viscosity of .66 cm3/g as measured in a 60:40 phenol/tetrachloroet bane | wt% | 72.3 | 62.3 | 52.3 | 57.3 | 57.3 | 62.3 | 62.3 | 62.3 | 42.3 | 57.3 |
| PET | Poly(ethylenetereph thalate), IV range: 0.9-0.3 | wt% | | | | | | | | | 20 | |
| GF1 | PBT lOumE-GF | wt% | 20 | 30 | 40 | 30 | | | | | | |
| GF2 | HPXSS PAX95 lOµm 4mm CS | wt% | | | | | 30 | | | | | 15 |
| GF3 | Flat glass | wt% | | | | | | 30 | | | | |
| GF4 | Glass flake | wt% | | | | | | | 30 | | | |
| GF5 | Glass bead | wt% | | | | | | | | 30 | | |
| GF6 | special glass fiber for low Dk/Df | wt% | | | | | | | | | 30 | |
| MN1 | uncoated talc, D50 -1µm | wt% | | | | | | | | | | 15 |
| EH1 | OLYBUTYLENE TERE/ISO PHTHALATE-CO-POLYOXYBUTYLENE | wt% | 2.5 | 2.5 | 2.5 | 2.5 | 2.5 | 2.5 | 2.5 | 2.5 | 2.5 | 2.5 |
| IM1 | Ethylene-EthylAcrylate Copolymer with EA below 20% | wt% | 2 | 2 | 2 | 2 | 2 | 2 | 2 | 2 | 2 | 2 |
| IM2 | TERPOLYMER : ETHYLENE-METHYL ACRYLATE-GLYCIDYL METHACRYLATE | wt% | 3 | 3 | 3 | 3 | 3 | 3 | 3 | 3 | 3 | 3 |
| HSI | pentaerythritol-tetrakis(3-(3,5-di-tert.butyl-4-hydroxy-phenyl-)propionate) | wt% | 0.15 | 0.15 | 0.15 | 0.15 | 0.15 | 0.15 | 0.15 | 0.15 | 0.15 | 0.15 |
| HS2 | tris(2,4-di-t-butylphenyl)phosphite | wt% | 0.05 | 0.05 | 0.05 | 0.05 | 0.05 | 0.05 | 0.05 | 0.05 | 0.05 | 0.05 |
| PM1 | Zinc Sulfide | wt% | | | | 5 | 5 | | | | | 5 |
| | *Bonding Strength on lapioint parts* | | | | | | | | | | | |
| | Bar bonding strength -average | MPa | 28 | 25 | 24 | 29 | 29 | 27 | 25 | 20 | 30 | 12 |
| | Bar bonding strength -standard deviation | MPa | 0.9 | 2.2 | 1.9 | 1.8 | 1.3 | 4.3 | 1.6 | 4.5 | 1.34 | 1.4 |
| | *Mechanical property* | | | | | | | | | | | |
| | MVR (270C/5kg) | cell O' | 55 | 20 | 9 | 25 | 29 | 51 | 28 | 68 | 34 | 2 |
| | Tensile Modulus | MPa | 5900 | 7900 | 10500 | 8050 | 10600 | 9916 | 6709 | 2754 | 8261 | 6508 |
| | Tensile Stress | MPa | 101.5 | 115 | 126 | 116 | 121 | 136 | 66 | 32 | 100 | 88 |
| | Tensile Elongation | % | 3.3 | 3.1 | 2.7 | 2.3 | 2.6 | 2.7 | 2.9 | 4.3 | 2.2 | 3.1 |
| | Notched Impact strength | *Jim* | 120 | 142 | 158 | 145 | 165 | 140 | 36 | 49 | 130 | 80 |

In certain embodiments, a second polymer including one or more of PET, PETO, PCCD, Tritan, SLX, PEI and XHT-PC was blended with PBT. The results showed in Table 10. It is found that the second polymer is preferred when it is partially or fully mixable with crystalline polyester. SN20 and SN25 showed the highest bonding strength. Both PET (semi crystalline polymer) and SLX copolymer (amorphous polymer) are mixable with PBT. And SN20 showed better flow performance but inferior impact strength.

**Table 10**

| Item | chemical descri12tion | unit | SN 10 | SN 19 | SN 20 | SN 21 | SN 22 | SN 23 | SN 24 | SN 25 | SN 26 | SN 27 |
|---|---|---|---|---|---|---|---|---|---|---|---|---|
| PBT1 | Polybutylene terephthalate, intrinsic viscosity of .66 cm3/g as measured in a 60:40 phenol/tetrachloroethane | wt % | 62.3 | 42.3 | 25.7 | 22.2 | 52.3 | 42.3 | 52.3 | 47.2 | 53.3 | 47.2 |
| PBT2 | Polybutylene terephthalate, intrinsic viscosity of 1.2 cm³/gas measured in a 60:40 phenol/tetrachloroethane. | wt % | | | 10.0 | 10.0 | | | | | | |
| PET | Poly(ethyleneterephthalate), IV range: 0.9-0.3 | wt % | | 20 | 34 | 30 | | | | | | |
| PETG | PETG CO-POLYESTER | wt % | | | | | 10 | | | | | |
| Tritan | 1,4- benzenedicarboxylic acid, dimethyl ester, polymer with 1,4-CHDM and 2,2,4,4-TMCBD | wt % | | | | | | 20 | | | | |
| PCCD | poly(1,4-cyclohexylenedimethylene 1-4,cyclohexanedicarboxylate), 2000 poise | wt % | | | | | | | 10 | | | |
| SLX | polymer from resorcinol, bisphenol A, p-cumylphenol, DAC, and phosgene, SLX 90/10 PCP capped 20M powder | wt % | | | | | | | | 15 | | |
| PEI | Polyetherimide, ULTEM™ 1010 Resin, Mw | wt % | | | | | | | | | 9 | |
| XHT-PC | PPPBP (N-Phenylphenolphthaleinylbisphenol, 2,2-Bis(4-hydro)-Bisphenol A Copolymer, 32 mol % PPPBP, Mw about 23,000 g/mol, interfacial polymerization, PCP end-capped, PDI = 2-3 | wt % | | | | | | | | | | 15 |
| GF1 | PBT lOum E-GF | wt % | 30 | 30 | 30 | 30 | 30 | 30 | 30 | 30 | 30 | 30 |
| EH1 | OLYBUTYLENE TERE/ISO PHTHALATE-CO-POLYOXYBUTYLENE | wt % | 2.5 | 2.5 | | 2.5 | 2.5 | 2.5 | 2.5 | 2.5 | 2.5 | 2.5 |
| EH2 | POE | wt % | | | | | | | | | | |
| IM1 | Ethylene- EthylAcrylate Copolymer with EA below 20% | wt % | 2 | 2 | | 2 | 2 | 2 | 2 | 2 | 2 | 2 |
| IM2 | TERPOLYMER : ETHYLENE- METHYL ACRYLATE - GLYCIDYL METHACRYLATE | wt % | 3 | 3 | | 3 | 3 | 3 | 3 | 3 | 3 | 3 |
| HSI | pentaerythritol- tetrakis(3-(3,5-di-tert.butyl-4-hydroxy-phenyl-)propionate) | wt % | 0.15 | 0.15 | 0.15 | 0.15 | 0.15 | 0.15 | 0.15 | 0.15 | 0.15 | 0.15 |
| HS2 | tris(2,4-di-t-butylphenyl)phosphite | wt % | 0.05 | 0.05 | 0.05 | 0.05 | 0.05 | 0.05 | 0.05 | 0.05 | 0.05 | 0.05 |
| TQ | Mono zinc phosphate | wt % | | | 0.1 | 0.1 | | | | 0.1 | | 0.1 |
| | *Bonding Strength on lap joint parts* | | | | | | | | | | | |
| | Bar bonding strength - average | MPa | 25 | 27 | 34 | 29 | 30 | 30 | 27 | 33 | 17 | 29 |
| | Bar bonding strength - standard deviation | MPa | 2.2 | 1.4 | 2.5 | 1.4 | 0.2 | 0.7 | 0.5 | 1.6 | 2.4 | 1.8 |
| | *Mechanical property* | | | | | | | | | | | |
| | MVR (270C/5kg) | cell O' | 20 | 16 | 56 | 13 | 19 | 9 | 29 | 27 | 17 | 27 |
| | Tensile Modulus | MPa | 7900 | 8000 | 9515 | 8547 | 7100 | 8000 | 7600 | 7900 | 8034 | 8200 |
| | Tensile Stress | MPa | 115 | 111 | 131 | 110 | 95 | 111 | 105 | 100 | 115 | 110 |
| | Tensile Elongation | % | 3.1 | 3.4 | 2.5 | 2.8 | 3.0 | 3.1 | 2.9 | 2.5 | 2.9 | 2.5 |
| | Notched Impact strength | *Jim* | 142 | 141 | 90 | 148 | 135 | 118 | 126 | 130 | 129 | 104 |

As illustrated in Table 11, SN25 showed superior shrinkage performance due to addition of amorphous SLX copolymer.

**Table 11**

| | Unit | SN20 | SN25 |
|---|---|---|---|
| Shrinkage, flow direction | % | 0.12 | 0.34 |
| Shrinkage, crossflow direction | % | 0.25 | 0.64 |

As noted, a composition containing >10% ITR copolymer can significantly improve the shrinkage performance, compared with the similar blends using PET. Shrinkage performance was measured using a SABIC method for shrinkage performance. The SABIC method for shrinkage performance covers the measurement of shrinkage from mold cavity dimensions to molded part dimensions. It is noted that the ASTM standard does not require measuring cavity pressure. Under the SABIC method, specimens are injection molded. The disk, typical ASTM part, used in this patent application, is 100 mm in diameter with a 3.2 mm thickness typical. Cross-flow (perpendicular to flow) and In-flow (parallel to flow) shrinkage are measured on 5 disks after conditioning at room temperature for 24 hours in a lab. The average shrinkage is reported out.

## Claims

1. A composition comprising:
from 20 wt% to 90 wt% of a polybutylene terephthalate component;
from greater than 0 wt% to 40 wt% of a polyester component,
from greater than 0 wt% to 30 wt% of a resorcinol-based aryl polyester component having greater than or equal to 40 mole % of its moieties derived from resorcinol,
from greater than 0 wt% to 30 wt% of a polyetherimide component, or from greater than 0 wt% to 30 wt% of a polycarbonate component, or a combination thereof,
from greater than 0 wt% to 20 wt% of an impact modifier component wherein the impact modifier comprises an epoxy-functional block copolymer; and
from 10 wt% to 60 wt% of a filler component comprising column glass fiber, round glass fiber, flat glass, glass flake, glass bead, or a combination thereof;
wherein the combined weight percent value of all components does not exceed 100 wt% and all weight percent values are based on the total weight of the composition; and
wherein the composition exhibits a greater bonding strength with metal than the polybutylene terephthalate component alone when tested in accordance with a procedure related to ISO 19095.

2. The composition of claim 1, wherein the polybutylene terephthalate component is present in an amount from 30 wt% to 65 wt%.

3. The composition of any of claims 1-2, wherein the polyester component is present in an amount from 15 wt% to 40 wt%.

4. The composition of any of claims 1-3, wherein the resorcinol-based aryl polyester component is present in an amount from 10 wt% to 20 wt% and has greater than or equal to 60 mole % of its moieties derived from resorcinol.

5. The composition of any of claims 1-4, wherein the polyetherimide component is present in an amount from 5 wt% to 20 wt%.

6. The composition of any of claims 1-5, wherein the filler component is present in an amount from 10 wt% to 50 wt%.

7. The composition of any of claims 1-6, wherein the composition exhibits a bonding strength of greater than 450 N measured using a procedure related to ISO 19095.

8. The composition of any of claims 1-7, wherein the composition exhibits a bonding strength of greater than 25 MPa measured using a procedure related to ISO 19095.

9. An article comprising a composition of any of claims 1-8, wherein the article is formed from a nano molding technology.

10. A method of improving the bonding strength between a blended thermoplastic and metal, the method comprising the step of combining:
from 20 wt% to 90 wt% of a polybutylene terephthalate component;
from greater than 0 wt% to 40 wt% of a polyester component,
from greater than 0 wt% to 30 wt% of a resorcinol-based aryl polyester component having greater than or equal to 40 mole % of its moieties derived from resorcinol,
from greater than 0 wt% to 30 wt% of a polyetherimide component, or from greater than 0 wt% to 30 wt% of a polycarbonate copolymer component, or a combination thereof,
from 10 wt% to 60 wt% of a filler component comprising column glass fiber, round glass fiber, flat glass, glass flake, glass bead, or a combination thereof;
wherein the combined weight percent value of all components does not exceed 100 wt% and all weight percent values are based on the total weight of the composition; and
wherein the composition exhibits a greater bonding strength with metal than the polybutylene terephthalate component alone when tested in accordance with a procedure related to ISO 19095.

## Patentansprüche

1. Zusammensetzung, umfassend:
20 Gew.-% bis 90 Gew.-% einer Polybutylenterephthalat-Komponente;
mehr als 0 Gew.-% bis 40 Gew.-% einer Polyester-Komponente,
mehr als 0 Gew.-% bis 30 Gew.-% einer auf Resorcin basierten Arylpolyester-Komponente, wobei 40 Mol-% oder mehr ihrer Reste von Resorcin abgeleitet sind,
mehr als 0 Gew.-% bis 30 Gew.-% einer Polyetherimid-Komponente oder mehr als 0 Gew.-% bis 30 Gew.-% einer Polycarbonat-Komponente oder eine Kombination davon,
mehr als 0 Gew.-% bis 20 Gew.-% einer Schlagzähmodifizierer-Komponente, wobei der Schlagzähmodifizierer ein epoxyfunktionelles Blockcopolymer umfasst, und
10 Gew.-% bis 60 Gew.-% einer Füllstoff-Komponente, die säulenförmige Glasfaser, runde Glasfaser, Flachglas, Glassplitter, Glasperle oder eine Kombination davon umfasst,
wobei der kombinierte Gewichtsprozentwert aller Komponenten 100 Gew.-% nicht überschreitet und alle Gewichtsprozentwerte auf das Gesamtgewicht der Zusammensetzung bezogen sind; und
wobei die Zusammensetzung bei der Prüfung gemäß dem Verfahren nach ISO 19095 eine größere Haftfestigkeit mit Metall als die Polybutylenterephthalat-Komponente allein aufweist.

2. Zusammensetzung nach Anspruch 1, wobei die Polybutylenterephthalat-Komponente in einer Menge von 30 Gew.-% bis 65 Gew.-% vorliegt.

3. Zusammensetzung nach einem der Ansprüche 1-2, wobei die Polyester-Komponente in einer Menge von 15 Gew.-% bis 40 Gew.-% vorliegt.

4. Zusammensetzung nach einem der Ansprüche 1-3, wobei die auf Resorcin basierte Arylpolyester-Komponente in einer Menge von 10 Gew.-% bis 20 Gew.-% vorliegt und 60 Mol-% oder mehr ihrer Reste von Resorcin abgeleitet sind.

5. Zusammensetzung nach einem der Ansprüche 1-4, wobei die Polyesterimid-Komponente in einer Menge von 5 Gew.-% bis 20 Gew.-% vorliegt.

6. Zusammensetzung nach einem der Ansprüche 1-5, wobei die Füllstoff-Komponente in einer Menge von 10 Gew.-% bis 50 Gew.-% vorliegt.

7. Zusammensetzung nach einem der Ansprüche 1-6, wobei die Zusammensetzung eine Haftfestigkeit, gemessen unter Verwendung eines Verfahrens nach ISO 19095, von mehr als 450 N aufweist.

8. Zusammensetzung nach einem der Ansprüche 1-7, wobei die Zusammensetzung eine Haftfestigkeit, gemessen unter Verwendung eines Verfahrens nach ISO 19095, von mehr als 25 MPa aufweist.

9. Artikel, umfassend eine Zusammensetzung nach einem der Ansprüche 1-8, wobei der Artikel mittels einer Nano-Gießtechnik hergestellt wird.

10. Verfahren zur Verbesserung der Haftfestigkeit zwischen einem Mischthermoplasten und Metall, wobei das Verfahren den Schritt umfasst, in dem Folgendes kombiniert wird:
20 Gew.-% bis 90 Gew.-% einer Polybutylenterephthalat-Komponente;
mehr als 0 Gew.-% bis 40 Gew.-% einer Polyester-Komponente,
mehr als 0 Gew.-% bis 30 Gew.-% einer auf Resorcin basierten Arylpolyester-Komponente, wobei 40 Mol-% oder mehr ihrer Reste von Resorcin abgeleitet sind,
mehr als 0 Gew.-% bis 30 Gew.-% einer Polyetherimid-Komponente oder mehr als 0 Gew.-% bis 30 Gew.-% einer Polycarbonatcopolymer-Komponente oder eine Kombination davon,
10 Gew.-% bis 60 Gew.-% einer Füllstoff-Komponente, die säulenförmige Glasfaser, runde Glasfaser, Flachglas, Glassplitter, Glasperle oder eine Kombination davon umfasst,
wobei der kombinierte Gewichtsprozentwert aller Komponenten 100 Gew.-% nicht überschreitet und alle Gewichtsprozentwerte auf das Gesamtgewicht der Zusammensetzung bezogen sind; und
wobei die Zusammensetzung bei der Prüfung gemäß dem Verfahren nach ISO 19095 eine größere Haftfestigkeit mit Metall als die Polybutylenterephthalat-Komponente allein aufweist.

## Revendications

1. Une composition comprenant :
de 20 % en poids jusqu'à 90 % en poids d'un composant de polybutylène téréphtalate ;
de plus de 0 % en poids jusqu'à 40 % en poids d'un composant polyester,
de plus de 0 % en poids jusqu'à 30 % en poids d'un composant polyester d'aryle à base de résorcinol ayant une proportion supérieure ou égale à 40 % en moles de ses groupes dérivés du résorcinol,
de plus de 0 % en poids jusqu'à 30 % en poids d'un composant polyétherimide, ou de plus de 0 % en poids jusqu'à 30 % en poids d'un composant polycarbonate, ou une combinaison de ceux-ci,
de plus de 0 % en poids jusqu'à 20 % en poids d'un composant modificateur de l'impact, où le modificateur de l'impact comprend un copolymère de bloc avec des groupes fonctionnels époxy ; et
de 10 % en poids jusqu'à 60 % en poids d'un composant de remplissage comprenant de la fibre de verre en colonne, de la fibre de verre ronde, du verre plat, des flacons de verre, des billes de verre ou une combinaison de ceux-ci ;
où la valeur combinée en pourcentage en poids de tous les composants ne dépasse pas 100 % en poids et toutes les valeurs en pourcentage en poids se basent sur le poids total de la composition ; et
où la composition présente une résistance de liaison avec le métal supérieure à celle du composant polybutylène téréphtalate seul lorsqu'elle est testée selon une procédure liée à ISO 19095.

2. La composition de la revendication 1, où le composant polybutylène téréphtalate est présent en une quantité de 30 % en poids jusqu'à 65 % en poids.

3. La composition de l'une des revendications 1-2, où le composant polyester est présent en une quantité de 15 % en poids jusqu'à 40 % en poids.

4. La composition de l'une des revendications 1-3, où le composant polyester d'aryle à base de résorcinol est présent en une quantité de 10 % en poids jusqu'à 20 % en poids et a une proportion supérieure ou égale à 60 % en moles de ses groupes dérivés du résorcinol.

5. La composition de l'une des revendications 1-4, où le composant polyétherimide est présent en une quantité de 5 % en poids jusqu'à 20 % en poids.

6. La composition de l'une des revendications 1-5, où le composant de remplissage est présent en une quantité de 10 % en poids jusqu'à 50 % en poids.

7. La composition de l'une des revendications 1-6, où la composition présente une force de liaison supérieure à 450 N, mesurée selon une procédure liée à ISO 19095.

8. La composition de l'une des revendications 1-7, où la composition présente une force de liaison supérieure à 25 MPa mesurée en utilisant une procédure liée à ISO 19095.

9. Un article comprenant une composition de l'une des revendications 1-8, où l'article est formé à partir d'une technologie de nanomoulage.

10. Une méthode pour améliorer la force de liaison entre un thermoplastique mélangé et un métal, la méthode comprenant l'étape de combinaison :
de 20 % en poids jusqu'à 90 % en poids d'un composant de polybutylène téréphtalate ;
de plus de 0 % en poids jusqu'à 40 % en poids d'un composant polyester,
de plus de 0 % en poids jusqu'à 30 % en poids d'un composant polyester d'aryle à base de résorcinol ayant une proportion supérieure ou égale à 40 % en moles de ses groupes dérivés du résorcinol,
de plus de 0 % en poids jusqu'à 30 % en poids d'un composant polyétherimide, ou de plus de 0 % en poids jusqu'à 30 % en poids d'un composant copolymère polycarbonate, ou une combinaison de ceux-ci,
de 10 % en poids jusqu'à 60 % en poids d'un composant de remplissage comprenant de la fibre de verre en colonne, de la fibre de verre ronde, du verre plat, des flacons de verre, des billes de verre ou une combinaison de ceux-ci ;
où la valeur combinée en pourcentage en poids de tous les composants ne dépasse pas 100 % en poids et toutes les valeurs en pourcentage en poids se basent sur le poids total de la composition ; et
où la composition présente une résistance de liaison avec le métal supérieure à celle du composant polybutylène téréphtalate seul lorsqu'elle est testée selon une procédure liée à ISO 19095.
